# EUROPÄISCHE PATENTANMELDUNG

(11) **EP 1 843 413 A2**
(43) Veröffentlichungstag der Anmeldung: **10.10.2007**
(21) Anmeldenummer: 07102042.4
(22) Anmeldetag: 09.02.2007
(51) Int. Cl.: H01M 2/10

(54) **Elektrogerät**

(30) Priorität: 07.04.2006 DE 102006018007
(71) Anmelder: ROBERT BOSCH GMBH, 70442 Stuttgart (DE)
(72) Erfinder: Glauning, Rainer, 72631 Aichtal-Groetzingen (DE); Breitenbach, Jan, 70569 Stuttgart (DE); Matthias, Wolf, 70469 Stuttgart (DE); Rejman, Marcin, 71332 Waiblingen (DE); Baumgartner, Josef, 70374 Stuttgart (DE); Seidel, Thorsten, 71686 Remseck Am Neckar (DE)

(57) **Zusammenfassung**

Die Erfindung geht aus von einem Elektrogerät mit einem Elektrogerätgrundkörper (12), einem vom Elektrogerätgrundkörper (12) abnehmbaren Akkupack (14) und einer Befestigungseinheit (30) zum Befestigen des Akkupacks (14) am Elektrogerätgrundkörper (12).

Es wird vorgeschlagen, dass die Befestigungseinheit (30) derart ausgeführt ist, dass bei einer Befestigungsbewegung ein elektrischer Kontakt zwischen dem Elektrogerätgrundkörper (12) und dem Akkupack (14) hergestellt wird.

## Beschreibung

### Stand der Technik

Die Erfindung geht aus von einem Elektrogerät nach dem Oberbegriff des Anspruchs 1.

Es ist ein Ladegerät zum Laden eines Akkupacks bekannt, welches eine Befestigungsschnittstelle zum Befestigen des Akkupacks aufweist.

### Vorteile der Erfindung

Die Erfindung geht aus von einem Elektrogerät mit einem Elektrogerätgrundkörper, einem vom Elektrogerätgrundkörper abnehmbaren Akkupack und einer Befestigungseinheit zum Befestigen des Akkupacks am Elektrogerätgrundkörper.

Es wird vorgeschlagen, dass die Befestigungseinheit derart ausgeführt ist, dass bei einer Befestigungsbewegung ein elektrischer Kontakt zwischen dem Elektrogerätgrundkörper und dem Akkupack hergestellt wird. Dadurch kann ein hoher Bedienkomfort erreicht werden. Es können außerdem Bauteile und Bauraum eingespart werden, da auf eine zusätzliche Betätigung einer Kontaktiereinheit zur Herstellung des elektrischen Kontakts verzichtet werden kann. Der Elektrogerätgrundkörper kann als Ladestation zum Laden des Akkupacks ausgebildet sein. Alternativ oder zusätzlich kann der Elektrogerätgrundkörper ein elektrischer Verbraucher sein, welcher zu einem Betrieb mit einer elektrischen Energie des Akkupacks versorgt wird. Insbesondere kann er als Elektrowerkzeug ausgeführt sein. Unter einer "Befestigungsbewegung" kann insbesondere eine Bewegung des Akkupacks relativ zum Elektrogerätgrundkörper verstanden werden, mit welcher der Akkupack in einen am Elektrogerätgrundkörper befestigten Zustand gebracht wird.

Es wird außerdem vorgeschlagen, dass die Befestigungsbewegung eine erste Teilbewegung mit einer ersten Bewegungsrichtung und zumindest eine zweite Teilbewegung mit einer von der ersten Bewegungsrichtung verschiedenen zweiten Bewegungsrichtung umfasst. Es kann dadurch ein sicherer Befestigungsmechanismus mit einer hohen Flexibilität in der Ausgestaltung der Befestigungseinheit erreicht werden.

Eine besonders einfache Ausführung der Befestigungseinheit kann insbesondere erreicht werden, wenn zumindest eine Teilbewegung eine Schwenkbewegung ist. Ein besonders intuitives Bedienen des Elektrogeräts kann insbesondere erreicht werden, wenn die erste Teilbewegung eine translatorische Bewegung und die zweite Teilbewegung eine Schwenkbewegung ist.

In einer bevorzugten Ausführungsform wird vorgeschlagen, dass das Elektrogerät ein Haltemittel aufweist, das den Akkupack bei einer Teilbewegung hält. Dadurch kann ein besonders sicherer und leicht zu bedienender Befestigungsmechanismus erzielt werden. Vorzugsweise hält das Haltemittel den Akkupack während der zweiten Teilbewegung.

In diesem Zusammenhang wird vorgeschlagen, dass das Haltemittel ein Arretiermittel zum Arretieren der ersten Teilbewegung aufweist. Ein Befestigungsmechanismus kann dadurch mit einer besonders kompakten Bauweise erzielt werden, da auf eine zusätzliche Arretierung verzichtet werden kann.

Es kann außerdem eine einfache Vorgehensweise bei der Befestigung des Akkupacks erreicht werden, wenn zumindest eine Teilbewegung eine Schwenkbewegung ist und das Haltemittel eine Schwenkachse der Schwenkbewegung festlegt.

In einer vorteilhaften Ausführungsvariante wird vorgeschlagen, dass das Haltemittel einen Einführbereich zum Einführen des Akkupacks bildet, wodurch ein intuitiv zu bedienender Befestigungsmechanismus erreicht werden kann.

Ferner wird vorgeschlagen, dass das Haltemittel dazu vorgesehen ist, eine translatorische Trennbewegung des Akkupacks nach der zweiten Teilbewegung zu verhindern. Es kann dadurch ein besonders sicherer Befestigungsmechanismus erreicht werden. Insbesondere kann ein vorteilhafter Schutz gegen ein unerwünschtes Lösen des Akkupacks vom befestigten Zustand, z.B. durch eine ungewollte Betätigung des Akkupacks oder durch die Schwerkraft, erzielt werden. Insbesondere kann das Haltemittel dazu vorgesehen sein, nach der zweiten Teilbewegung jegliche translatorischen Trennbewegungen des Akkupacks zu unterbinden. Vorteilhafterweise bildet das Haltemittel einen Einführbereich, der zum Einführen des Akkupacks vorgesehen ist, wobei der Einführbereich so ausgebildet ist, dass er das Einführen des Akkupacks in einer translatorischen Richtung in eine entriegelte Position erlaubt und nach dem Einführen des Akkupacks eine Drehung desselben um mindestens eine rotatorische Achse in eine verriegelte Position erlaubt. Vorzugsweise wirkt in diesem Zusammenhang das Haltemittel, insbesondere eine Hinterschneidung des Haltemittels, nach der Drehung mit dem Akkupack formschlüssig so zusammen, dass der Akkupack dazu mindestens in Richtung der translatorischen Richtung nicht mehr trennbar ist.

Eine besonders robuste Halterung des Akkupacks kann erreicht werden, wenn das Haltemittel ein Mittel zum Hintergreifen eines Teilbereichs des Akkupacks aufweist. Insbesondere kann eine große Anlagefläche zum Anliegen am Akkupack erzielt werden.

In einer weiteren Ausführungsform der Erfindung wird vorgeschlagen, dass das Elektrogerät ein Kontaktmittel aufweist, das bei der Befestigungsbewegung in eine Ausnehmung des Akkupacks eingreift. Dadurch können ein besonders einfacher Kontaktiermechanismus und eine kompakte Ausgestaltung des Akkupacks erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ladegerät und einen Akkupack, der in einen Bereich des Ladegeräts eingeführt wird,
- Fig. 2: eine Schwenkbewegung des am Bereich gestützten Akkupacks und
- Fig. 3: das Ladegerät und den im Bereich des Ladegeräts befestigten Akkupack.

### Beschreibung des Ausführungsbeispiels

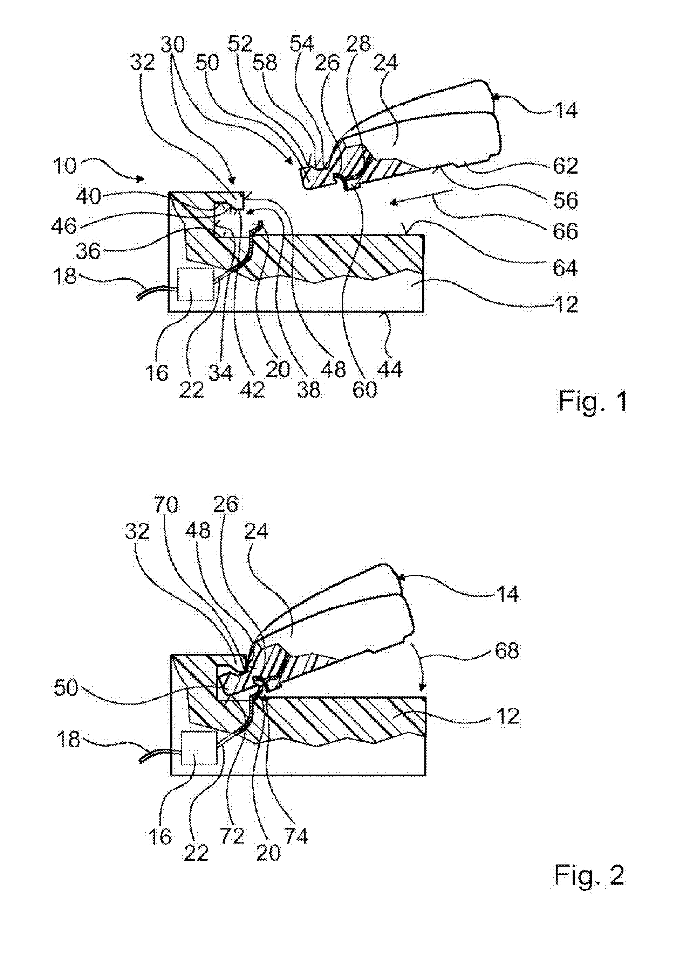

Figur 1 zeigt ein Elektrogerät 10, welches einen als Ladegerät ausgebildeten Elektrogerätgrundkörper 12 und einen Akkupack 14 aufweist. Der Elektrogerätgrundkörper 12 weist ein Gehäuse auf. Im Gehäuse ist eine Ladeeinheit 16 angeordnet, die im Betrieb einen Ladestrom zum Laden des Akkupacks 14 erzeugt. Die Ladeeinheit 16 ist im Betrieb über eine Netzstromversorgung 18 mit elektrischer Energie versorgt. An die Ladeeinheit 16 ist außerdem ein metallisches Kontaktmittel 20 über eine elektrische Verbindung 22 angeschlossen. Der Akkupack 14 umfasst ein Gehäuse 24, in welchem nicht dargestellte Akkuzellen montiert sind. Er weist ferner ein Kontaktiermittel 26 auf, das zur Herstellung einer elektrischen Verbindung mit der Ladeeinheit 16 durch ein Kontaktieren des Kontaktmittels 20 vorgesehen ist. Das Kontaktiermittel 26 ist mit den Akkuzellen über eine elektrische Verbindung 28 verbunden.
Zur Befestigung des Akkupacks 14 an dem Elektrogerätgrundkörper 12 ist das Elektrogerät 10 mit einer Befestigungseinheit 30 versehen. Die Befestigungseinheit 30 weist einen an dem Elektrogerätgrundkörper 12 angeformten Fortsatz auf. Dieser Fortsatz ist als Haltemittel 32 ausgebildet, das zu einem Halten des Akkupacks 14 während dessen Befestigung vorgesehen ist. Die Funktionsweise des Haltemittels 32 wird anhand von Figur 2 näher beschrieben. Das Haltemittel 32 bildet im Zusammenwirken mit zwei Außenflächen 34, 36 des Elektrogerätgrundkörpers 12 einen Einführbereich 38, in welchen der Akkupack 14 bei seiner Befestigung eingeführt wird. Ferner weist das Haltemittel 32 zwei voneinander abgesetzte Anlageflächen 40, 42 auf. Diese Anlageflächen 40, 42 sind durch eine relativ zu einer Basisseite 44 des Elektrogerätgrundkörpers 12 schräg ausgerichtete, weitere Anlagefläche 46 verbunden. Die Anlageflächen 40, 42, 46 liegen im befestigten Zustand des Akkupacks 14 am Akkupack 14 an. Das Haltemittel 32 bildet ferner eine Frontfläche, die als Arretiermittel 48 ausgebildet ist, dessen Funktion in Figur 2 näher beschrieben wird. Auf der Seite des Akkupacks 14 weist die Befestigungseinheit 30 einen als Fortsatz des Gehäuses 24 ausgebildeten Teilbereich 50 des Akkupacks 14 auf. Dieser Teilbereich 50 wird bei einer Befestigung in den Einführbereich 38 des Elektrogerätgrundkörpers 12 eingeführt und ermöglicht, wie anhand der nächsten Figuren beschrieben, im Zusammenwirken mit dem Haltemittel 32 eine Befestigung des Akkupacks 14 am Elektrogerätgrundkörper 12. Der Teilbereich 50 bildet zwei voneinander abgesetzte Anlageflächen 52, 54, die mit einer relativ zu einer Basisseite 56 des Gehäuses 24 schräg ausgerichteten Anlagefläche 58 verbunden sind. Die Anlageflächen 52, 54, 58 liegen im befestigten Zustand des Akkupacks 14 am Elektrogerätgrundkörper 12 an. Das Gehäuse 24 weist ferner zwei Stützmittel 60, 62 zum Stützen des Akkupacks 14 auf, die in einem am Elektrogerätgrundkörper 12 befestigten Zustand des Akkupacks 14 an einer Anlagefläche 64 des Elektrogerätgrundkörpers 12 anliegen.

Die Befestigung des Akkupacks 14 am Elektrogerätgrundkörper 12 erfolgt durch eine Befestigungsbewegung, welche in zwei Teilbewegungen zerlegt werden kann. Bei einer ersten Teilbewegung wird der Akkupack 14 translatorisch in einer ersten Bewegungsrichtung 66 durch einen Benutzer bewegt. Bei dieser Teilbewegung wird der Teilbereich 50 des Akkupacks 14 in den Einführbereich 38 eingeführt.

In Figur 2 ist der Akkupack 14 dargestellt, wobei der Teilbereich 50 im Einführbereich angeordnet ist. Die erste Teilbewegung wird durch das Arretiermittel 48 gestoppt, und zwar durch ein Anschlagen des Akkupacks 14 auf das als Frontfläche des Haltemittels 32 ausgebildete Arretiermittel 48. Nach diesem Anschlagen findet eine zweite Teilbewegung der Befestigungsbewegung statt. Hierzu wird der Akkupack 14 in einer zweiten, als Schwenkrichtung ausgebildeten Bewegungsrichtung 68 geschwenkt. Bei der ersten Teilbewegung greift das Haltemittel 32, von der Basisseite 44 des Elektrogerätgrundkörpers 12 aus betrachtet, hinter den Teilbereich 50 des Akkupacks 14. Hierdurch wird der Akkupack 14 bei der zweiten Teilbewegung durch das Haltemittel 32 gehalten. Ferner legt das Haltemittel 32 eine Schwenkachse 70 für die Schwenkbewegung fest. Diese Schwenkachse 70 ist von einer Stützachse des Haltemittels 32, an welcher sich der Akkupack 14 abstützt, gebildet. In diesem Beispiel ist diese Stützachse eine Kante des Haltemittels 32. Bei der ersten Teilbewegung wird das Kontaktmittel 20, welches als ein federnder Kontakthaken ausgeführt ist, von einer unteren Fläche 72 des Akkupacks 14 gedrückt, wobei eine Rückstellkraft des Kontaktmittels 20 entsteht. Bei der zweiten Teilbewegung, und zwar bei dem Schwenken des Akkupacks 14 um die Schwenkachse 70, gleitet das Kontaktmittel 20 entlang der unteren Fläche 72, bis es in eine Ausnehmung 74 des Akkupacks 14 eingreift bzw. einrastet. Bei diesem Eingreifen tritt das Kontaktmittel 20 in Berührung mit dem Kontaktiermittel 26. Hierdurch entsteht ein elektrischer Kontakt zwischen dem Akkupack 14 und der Ladeeinheit 16. Die hier beschriebene Art der Kontaktierung zwischen dem Kontaktmittel 20 und dem Kontaktiermittel 26 bei der Schwenkbewegung ist unabhängig von der Platzierung des Kontaktiermittels 26 im Akkupack 14. In einer Ausführungsvariante kann die Kontaktierung z.B. im hinteren Bereich des Akkupacks 14, welcher dem Teilbereich 50 gegenüber angeordnet ist, hergestellt werden. Eine Kontaktierung in der Mitte des Akkupacks 14, z.B. zwischen den Stützmitteln 60, 62, ist ebenfalls denkbar. Es ist des Weiteren denkbar, dass der hintere Bereich alternativ oder zusätzlich zum Teilbereich 50 zu einer Befestigung des Akkupacks 14 am Elektrogerätgrundkörper 12 ausgeführt ist. Dabei kann das Gehäuse 24 im befestigten Zustand durch den Elektrogerätgrundkörper 12 umgriffen sein.

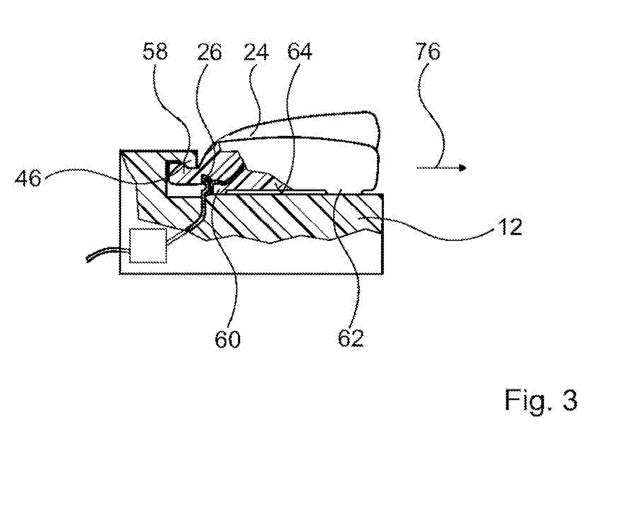

Die Schwenkbewegung wird durch ein Anschlagen der Stützmittel 60, 62 an die Anlagefläche 64 gestoppt. Dieser Endzustand ist in Figur 3 dargestellt. Der Endzustand nach der zweiten Teilbewegung entspricht dem befestigten Zustand des Akkupacks 14. Dabei liegen die Anlageflächen 52, 54, 58 des Akkupacks 14 an den Anlageflächen 40, 42 bzw. 46 an. Durch das Anliegen der Anlagefläche 46 an der Anlagefläche 58 ist eine translatorische Bewegung des Akkupacks 14 in einer Richtung 76 parallel zur Basisseite 44 des Elektrogerätgrundkörpers 12 verhindert, wodurch ein unerwünschtes Lösen des Akkupacks 14 vermieden werden kann. Der Akkupack 14 kann ausschließlich durch ein Schwenken entgegen der Bewegungsrichtung 68 gelöst werden.

## Patentansprüche

1. Elektrogerät mit einem Elektrogerätgrundkörper (12), einem vom Elektrogerätgrundkörper (12) abnehmbaren Akkupack (14) und einer Befestigungseinheit (30) zum Befestigen des Akkupacks (14) am Elektrogerätgrundkörper (12), **dadurch gekennzeichnet, dass** die Befestigungseinheit (30) derart ausgeführt ist, dass bei einer Befestigungsbewegung ein elektrischer Kontakt zwischen dem Elektrogerätgrundkörper (12) und dem Akkupack (14) hergestellt wird.

2. Elektrogerät nach Anspruch 1, **dadurch gekennzeichnet, dass** die Befestigungsbewegung eine erste Teilbewegung mit einer ersten Bewegungsrichtung (66) und zumindest eine zweite Teilbewegung mit einer von der ersten Bewegungsrichtung verschiedenen zweiten Bewegungsrichtung (68) umfasst.

3. Elektrogerät nach Anspruch 2, **dadurch gekennzeichnet, dass** zumindest eine Teilbewegung eine Schwenkbewegung ist.

4. Elektrogerät nach Anspruch 2 oder 3, **gekennzeichnet durch** ein Haltemittel (32), das den Akkupack (14) bei einer Teilbewegung hält.

5. Elektrogerät nach Anspruch 4, **dadurch gekennzeichnet, dass** das Haltemittel (32) ein Arretiermittel (48) zum Arretieren der ersten Teilbewegung aufweist.

6. Elektrogerät nach Anspruch 4 oder 5, **dadurch gekennzeichnet, dass** zumindest eine Teilbewegung eine Schwenkbewegung ist und das Haltemittel (32) eine Schwenkachse (70) der Schwenkbewegung festlegt.

7. Elektrogerät nach einem der Ansprüche 4 bis 6, **dadurch gekennzeichnet, dass** das Haltemittel (32) einen Einführbereich (38) zum Einführen des Akkupacks (14) bildet.

8. Elektrogerät nach einem der Ansprüche 4 bis 7, **dadurch gekennzeichnet, dass** das Haltemittel (32) dazu vorgesehen ist, eine translatorische Trennbewegung des Akkupacks (14) nach der zweiten Teilbewegung zu verhindern.

9. Elektrogerät nach einem der Ansprüche 4 bis 8, **dadurch gekennzeichnet, dass** das Haltemittel (32) ein Mittel zum Hintergreifen eines Teilbereichs (50) des Akkupacks (14) aufweist.

10. Elektrogerät nach einem der vorhergehenden Ansprüche, **gekennzeichnet durch** ein Kontaktmittel (20), das bei der Befestigungsbewegung in eine Ausnehmung (74) des Akkupacks (14) eingreift.
